(19) Europäisches Patentamt
European Patent Office
Office européen des brevets

(11) **EP 2 572 904 A1**

(12) **EUROPEAN PATENT APPLICATION**

(43) Date of publication:
**27.03.2013 Bulletin 2013/13**

(51) Int Cl.:
**B60C 23/04** (2006.01)

(21) Application number: **12166318.1**

(22) Date of filing: **02.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.09.2011 KR 20110096368**

(71) Applicant: **Samsung Electro-Mechanics Co., Ltd Suwon Gyunggi-do 443-743 (KR)**

(72) Inventors:
• **Hyun, Hae Seung 443-743 Gyunggi-do (KR)**

• **Han, Won 443-743 Gyunggi-do (KR)**
• **Song, Jong Hyeong 443-743 Gyunggi-do (KR)**
• **Lee, Kyung No 443-743 Gyunggi-do (KR)**

(74) Representative: **Heine, Christian Klaus KNH Patentanwälte Kahlhöfer Neumann Rößler Heine Postfach 10 33 63 40024 Düsseldorf (DE)**

(54) **Tire pressure monitoring system (TPMS) Device**

(57) Disclosed herein is a tire pressure monitoring system (TPMS) device. The TPMS device includes: a pressure sensor recognizing an inner pressure of a tire; a pressure signal collecting processor collecting and processing a pressure signal of the pressure sensor; a motion sensor mounted in a vehicle body; and a motion signal collecting processor collecting and processing a motion signal from the motion sensor. Here, a position of the tire is determined by comparing a magnitude or a phase between the pressure signal and the motion signal.

**FIG.1**

**EP 2 572 904 A1**

**Description**

CROSS REFERENCE TO RELATED APPLICATION

This application claims the benefit of Korean Patent Application No. 10-2011-0096368, filed on September 23, 2011, entitled "Tire Pressure Monitoring System (TPMS) Device", which is hereby incorporated by reference in its entirety into this application.

BACKGROUND OF THE INVENTION

1. Technical Field

The present invention relates to a tire pressure monitoring device.

2. Description of the Related Art

The present invention relates to a tire pressure monitoring system (TPMS) device automatically determining a position of a tire. Demands for "auto location" function that automatically determine a position of a tire has been increased because of growing necessity of notifying a driver of information regarding the tire position when the tire pressure is outside a normal level.

In this regard, many methods in which the auto location function is realized in TPMS have been disclosed.

However, the currently known methods have advantages and disadvantages, and for example, superior performance may require high installation costs, and low installation costs may require a reduction in the accuracy for recognizing the location of the tire in the auto location function.

As a more practical example, a method in which an low frequency (LF) transmitter is installed in the vicinity of each wheel of the tire, and signals selectively transmitted from the LF transmitter to a specific TPMS and radio frequency (RF) signals transmitted from a sensor module in response to a TPMS sensor module when the signals transmitted to the specific TPMS are analyzed to thereby determine the position of the tire may be given.

This method has an advantage in that it determines the location of the tire with high accuracy, however, troublesome in that the LF transmitter is required to be installed by connecting a signal line to the vicinity of each of the wheels. That is, the disadvantage is that it requires high installation costs of the system.

As another method in which the auto location function is realized in the TPMS, a method in which a two-axis acceleration sensor, or the like is installed to recognize a rotation direction of the tire for left/right determination of the tire, and values for a traveling direction (forward and reverse) of a vehicle are combined to determine the left and right location of the tire is given.

That is, the tire rotated in the clockwise direction while the vehicle is moving forward is determined as the tire in the right side, and the tire rotated in the counter-clockwise direction while the vehicle is moving forward is determined as the tire in the left side.

To recognize the rotation direction of the tire for the left/right determination of the tire, a method of using the two-axis acceleration sensor, a method of using a geomagnetic sensor, and the like have been suggested; however, the two methods are the same in that the front tire and the rear tire are basically distinguished by the strength of RF radio frequency (RF) signals.

In addition, the front tire and the rear tire may be typically distinguished by the strength of the RF signals transmitted from the TPMS sensor module to an electronic control unit (ECU). For example, in the case in which the ECU is installed in the front bump of the vehicle, when the strength of the RF signals transmitted to the ECU is great, it is determined as being the front tire, and when the strength thereof is small, it is determined as being the rear tire.

However, the method of distinguishing the front tire and the rear tire using the strength of the RF signals has a limitation in the installation position of the ECU.

Specifically, the RF signals are distorted by the metal material of the typical vehicle. Here, the method for distinguishing the front tire and the rear tire using the strength of the RF signals has low accuracy due to the distortion of the RF signal by the vehicle body when the ECU is installed in a position different from the front bumper and the rear bumper.

That is, when the installation position of the ECU is limited to the front bumper and the rear bumper of the vehicle, the length of the wiring increases in comparison with when the ECU is installed in a position different from the front bumper and the rear bumper, and a waterproof design, a shock-resistance design, and the like may be needed. This means an increase in the installation costs of the system. In addition, since the front bumper and the rear bumper are frequently shocked in comparison with other parts of the vehicle body, the failure of the ECU is likely to occur frequently.

As another method in which the auto location function is realized in the TPMS, a method in which a position of the tire is determined using a relationship between anti-lock brake system (ABS) data and the tire's pressure measured in the TPMS sensor module is given. More specifically, the tire has more pressure by the weight of the vehicle when the pressure of the tire is lowered, and traveling in this state requires a larger number of times the tire is rotated in comparison with other tires having a normal tire pressure. That is, in this method, the number of times the tire is rotated is measured and analyzed through the ABS in this method. In this method, the number of times the tire is rotated is analyzed utilizing the ABS generally mounted in the vehicle, and using a value of a pressure sensor basically mounted in the TPMS, thereby realizing low costs.

However, when the pressure of the front/rear or the left/right tires is simultaneously changed, it is difficult to determine the position of the tire.

Accordingly, in order to overcome the above described disadvantages in the related art and to realize the position determination of the tire in the TPMS, that is, the auto location function, there is a demand for a method that has high determination reliability and realizes lower costs.

SUMMARY OF THE INVENTION

The present invention has been made in an effort to provide a method that may have high determination reliability and realize low costs when realizing a position determination of a tire, that is, an auto location function in a tire pressure monitoring system (TPMS) device.

According to a first preferred embodiment of the present invention, there is provided a tire pressure monitoring system (TPMS) device, including: a pressure sensor recognizing an inner pressure of a tire; a pressure signal collecting processor collecting and processing a pressure signal of the pressure sensor; a motion sensor mounted in a vehicle body; and a motion signal collecting processor collecting and processing a motion signal from the motion sensor, wherein a position of the tire is determined by comparing a magnitude or a phase between the pressure signal and the motion signal.

Here, the motion sensor may be one of an acceleration sensor, a displacement sensor, and an angular velocity sensor.

Also, the position of the tire may be determined by comparing an increase or a reduction amount in acceleration of the vehicle body in the direction of gravity of the acceleration sensor and an increase or a reduction amount in the inner pressure of the tire of the pressure sensor.

Also, the position of the tire may be determined by comparing an increase or a reduction amount in a displacement of the vehicle body in the direction of gravity of the displacement sensor and a reduction or increase amount of the inner pressure of the tire of the pressure sensor.

Also, the position of the tire may be determined by comparing an increase or a reduction amount of an angular velocity of the vehicle body in the direction of gravity of the angular velocity sensor and an increase or a reduction amount of the inner pressure of the tire of the pressure sensor.

According to a second preferred embodiment of the present invention, there is provided a TPMS device, including: a pressure sensor recognizing an inner pressure of a tire; a pressure signal collecting processor collecting and processing a pressure signal of the pressure sensor; a motion sensor mounted in a vehicle axle; and a motion signal collecting processor collecting and processing a motion signal from the motion sensor, wherein a position of the tire is determined by comparing a magnitude or a phase between the pressure signal and the motion signal.

Here, the motion sensor may be one of an acceleration sensor, a displacement sensor, and an angular velocity sensor.

Also, the position of the tire may be determined by comparing an increase or a reduction amount of the acceleration of a vehicle axle in the direction of gravity of the acceleration sensor and an increase or reduction amount of the inner pressure of the tire of the pressure sensor.

Also, the position of the tire may be determined by comparing an increase or a reduction amount of a displacement of a vehicle axle in the direction of gravity of the displacement sensor and a reduction or increase amount of the inner pressure of the tire of the pressure sensor.

Also, the position of the tire may be determined by comparing an increase or a reduction amount of the acceleration of a vehicle axle in the direction of gravity of the angular velocity sensor and an increase or a reduction amount of the inner pressure of the tire of the pressure sensor.

According to a third preferred embodiment of the present invention, there is provided a TPMS device, including: a pressure sensor recognizing an inner pressure of a tire; a pressure signal collecting processor collecting and processing a pressure signal of the pressure sensor; a plurality of motion sensors mounted in a vehicle body and a vehicle axle; and a motion signal collecting processor collecting and processing a motion signal from the plurality of motion sensors, wherein a position of the tire is determined by comparing a combination of a magnitude or a phase between the pressure signal and the motion signal.

Here, the plurality of motion sensors may be one of an acceleration sensor, a displacement sensor, and an angular velocity sensor.

Also, the position of the tire may be determined by comparing an increase or a reduction amount of the acceleration of a vehicle body and a vehicle axle in the direction of gravity of the acceleration sensor, and an increase or a reduction amount of the inner pressure of the tire of the pressure sensor.

Also, the position of the tire may be determined by comparing an increase or a reduction amount of the displacement of a vehicle body and a vehicle axle in the direction of gravity of the displacement sensor and a reduction or an increase amount of the inner pressure of the tire of the pressure sensor.

Also, the position of the tire may be determined by comparing an increase or a reduction amount in acceleration of a vehicle body and a vehicle axle in the direction of gravity of the angular velocity sensor and an increase or a reduction amount in the inner pressure of the tire of the pressure sensor.

BRIEF DESCRIPTION OF THE DRAWINGS

FIG. 1 is a conceptual configuration diagram of a tire pressure monitoring system (TPMS) device 100 according to a preferred embodiment of the present invention;

FIG. 2 is a diagram illustrating force by acceleration exerted on a tire for each position of a vehicle body in the TPMS device 100 and an inner pressure of the tire according to a preferred embodiment of the present invention;

FIGS. 3A and 3B are vehicle dynamics models for describing a position determination method of the TPMS device 100 according to a preferred embodiment of the present invention;

FIGS. 4A and 4B are signal graphs for describing a position determination method of the TPMS device 100 according to a preferred embodiment of the present invention; and

FIG. 5 is one of the various flowcharts using an acceleration sensor mounted in a vehicle body and a vehicle axle of the TPMS device 100 according to a preferred embodiment of the present invention.

DESCRIPTION OF THE PREFERRED EMBODIMENTS

Various objects, advantages and features of the invention will become apparent from the following description of embodiments with reference to the accompanying drawings.

The terms and words used in the present specification and claims should not be interpreted as being limited to typical meanings or dictionary definitions, but should be interpreted as having meanings and concepts relevant to the technical scope of the present invention based on the rule according to which an inventor can appropriately define the concept of the term to describe most appropriately the best method he or she knows for carrying out the invention.

Various objects, advantages and features of the invention will become apparent from the following description of embodiments with reference to the accompanying drawings. In the specification, in adding reference numerals to components throughout the drawings, it is to be noted that like reference numerals designate like components even though components are shown in different drawings. Further, when it is determined that the detailed description of the known art related to the present invention may obscure the gist of the present invention, the detailed description thereof will be omitted.

Hereinafter, preferred embodiments of the present invention will be described in detail with reference to the accompanying drawings.

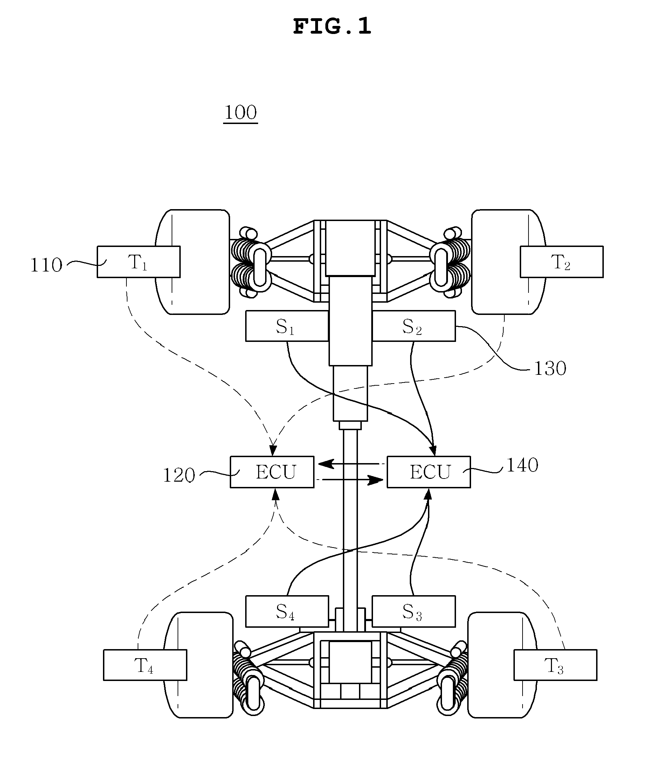

FIG. 1 is a conceptual configuration diagram of a TPMS device 100 according to a preferred embodiment of the present invention.

A position recognition method of the TPMS device in the prior art requires additional components, so that costs are increased, and accuracy is reduced. However, in the present invention, a method in which the position recognition of the TPMS device is accurately carried out using a pressure sensor basically provided in the TPMS and sensor signals around the wheels is disclosed.

The TPMS device 100 includes a pressure sensor 110 (T1, T2, T3, and T4), a pressure signal collecting processor 120 for collecting and processing an inner pressure signal, a motion sensor 130 (S1, S2, S3, and S4) provided around the wheels, and a motion signal collecting processor 140 for collecting and processing a motion signal.

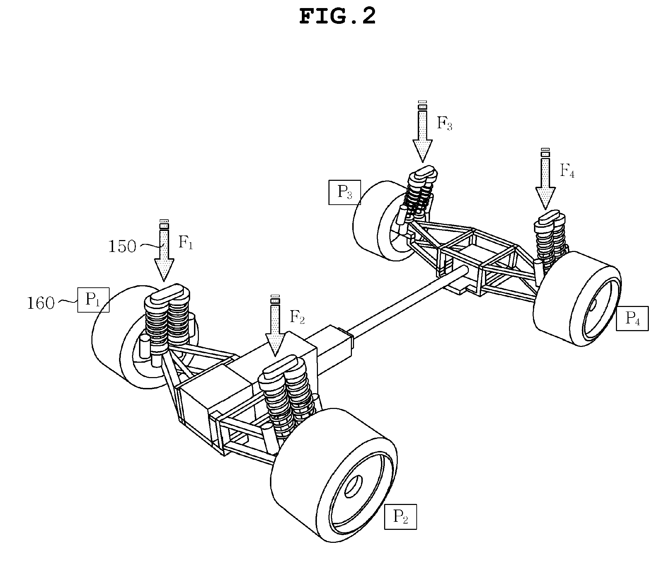

FIG. 2 is a diagram illustrating force 150 (F1, F2, F3, and F4) exerted on a tire from a vehicle body of the TPMS device 100 and an inner pressure 160 (PI, P2, P3, and P4) of the tire according to a preferred embodiment of the present invention.

At the time of traveling, a change in acceleration in the direction of gravity is created for each position of the tires of a vehicle body of a vehicle by steering, acceleration/deceleration, an irregular road surface, and the like, so that the force 150 (F1, F2, F3, and F4) applied to each of the four wheels is changed, and at the same time, the inner pressure 160 (PI, P2, P3, and P4) of the tire is changed accordingly.

For example, when F1 is increased, P1 may be also increased. Conversely, when F1 is reduced, P1 may be also reduced. The remaining F2, F3, and F4, and the remaining P2, P3, and P4 may be the same.

The force (F1, F2, F3, and F4) may be obtained using signals of the motion sensor around the wheels (a vehicle body or a vehicle axle), and mutually corresponding force F and inner pressure P with respect to the same time may be obtained when comparing the obtained force and the inner pressure 160 (PI, P2, P3, and P4) of the tire.

Using the above described principle, a position of the TPMS device may be determined.

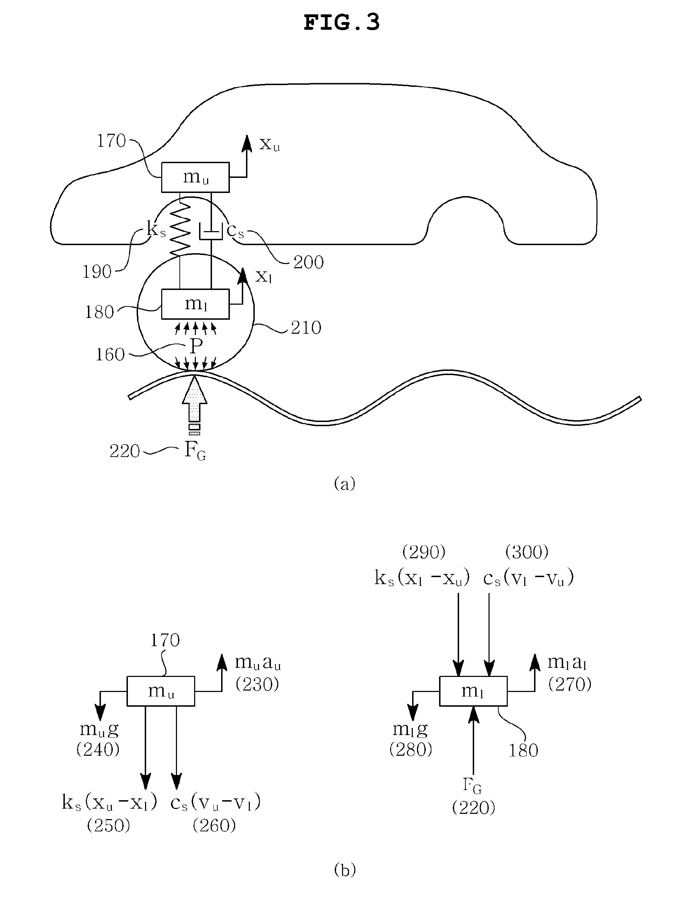

FIGS. 3A and 3B are to describe a position determination method of the TPMS device 100 according to a preferred embodiment of the present invention, and FIG. 3A is a vehicle dynamics model.

Here, the vehicle dynamics model corresponds to 1/4 of the entire vehicle, and a model of a vehicle considering a vertical force for each part of the wheel is generally represented by a mass 170 ($m_u$) of the vehicle body, a mass 180 ($m_l$) of the vehicle axle, suspension 190 ($k_s$), and a damper 200 (c). Here, the mass 170 ($m_u$) of the vehicle body is the general term for an upper mass (sprung mass) of the vehicle that is supported by the suspension 190 ($k_s$), and the mass 180 ($m_l$) of the vehicle axle is the general term for a lower mass (upsprung mass) of the vehicle including a wheel and a tire of a chassis while supporting the suspension 190 ($k_s$).

The mass 170 ($m_u$) of the vehicle body is connected with the mass 180 ($m_l$) of the vehicle axle by the suspension 190 ($k_s$) and the damper 200 (c). Here, since a spring constant of the tire 210 is significantly large in comparison with a spring constant by the suspension 190, it is assumed that a grasping force 220 ($F_G$) exerted on the tire 210 is exerted on the mass 180 ($m_l$) of the vehicle axle as it is.

FIG. 3B indicates object of freedom with respect to each of the mass of the vehicle body and the mass of the vehicle axle in a kinetic force balancing state. In the mass 170 ($m_u$) of the vehicle body, acceleration 230 of the vehicle body, gravity 240 of the vehicle body, a spring force 250 exerted on the vehicle body, and a damping force 260 exerted on the vehicle body exist.

The acceleration of the vehicle body in the kinetic force balancing state is represented as the following Equation 1.

[Equation 1]

$$m_u\alpha_u = -k_s(x_u-x_l)-c_s(v_u-v_l)-m_ug.$$

Here, $m_u$, $\alpha_u$, $k_s$, $x_u$, $x_l$ $c_s$, $v_u$, $v_l$, and g respectively denote a mass of the vehicle body, acceleration of the vehicle body, a spring constant, a displacement of the vehicle body, a displacement of the vehicle axle, a damping constant, a speed of the vehicle body, a speed of the vehicle axle, and acceleration of gravity.

Similarly, by applying the kinetic force balancing the mass of the vehicle axle, the acceleration of the vehicle body is represented as the following Equation 2.

[Equation 2]

$$m_l\alpha_l = -k_s(x_l-xu)-c_s(v_l-v_u)-m_ug+F_G.$$

Here, $m_l$, $\alpha_l$, $k_s$, $x_l$, $x_u$, $c_s$, $v_l$, $v_u$, g, and $F_G$ respectively denote a mass of the vehicle axle, an acceleration of the vehicle axle, a spring constant, a displacement of the vehicle axle, a displacement of the vehicle body, a damping constant, a speed of the vehicle axle, a speed of the vehicle body, an acceleration of gravity, and a road surface force.

The following Equation 3 is obtained based on Equation 1 and Equation 2.

[Equation 3]

$$F_G = m_u\alpha_u + m_l\alpha_l + m_ug + m_lg.$$

In Equation 3, the force exerted on the vehicle axle by a road surface denotes a sum of acceleration 230 of the vehicle body, acceleration 270 of the vehicle axle, gravity 240 of the vehicle body, and gravity 280 of the vehicle axle. When considering the gravity of the vehicle body and the gravity of the vehicle axle which are a constant, the force exerted on the vehicle axle by the road surface is proportional to the acceleration of the vehicle axle and the acceleration of the vehicle body. In this case, since an increase and a reduction in the road surface force are changed in response to an increase and a reduction in the inner pressure during the same time, a sum of the inner pressure signals of each of the tires and acceleration signals of the vehicle body and the vehicle axle have the same phase difference.

In addition, a change in the inner pressure signal dominantly has the same change in the phase difference only with respect to only one of the acceleration of the vehicle body and the acceleration of the vehicle axle in accordance with a magnitude of acceleration and a mass of each of the vehicle body and the vehicle axle.

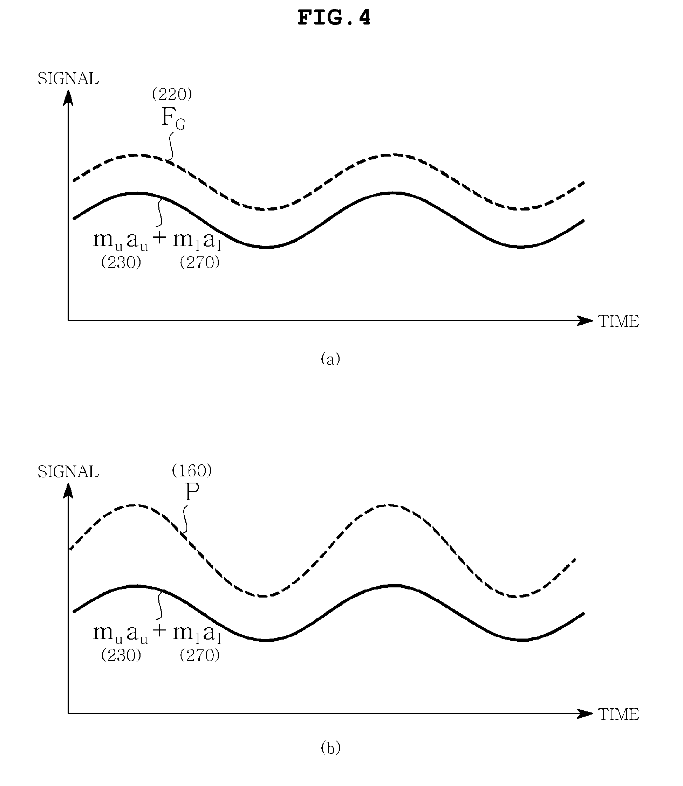

FIGS. 4A and 4B are signal graphs for describing a position determination method of the TPMS device 100 according to a preferred embodiment of the present invention. FIG. 4A is a graph in which a sum of signals of a road surface force 220 and signals of the acceleration 230 of the vehicle body and the acceleration 270 of the vehicle axle are changed while having the same phase difference. FIG. 4B is a graph in which a sum of signals of the inner pressure 160 and signals of the acceleration 230 of the vehicle body and the acceleration 270 of the vehicle axle are changed while having the same phase difference.

Meanwhile, a garage sensor, a gyro sensor, a traveling-direction acceleration sensor, a transverse acceleration sensor, and the like as well as a vertical-direction acceleration sensor are provided around the wheels (the vehicle body or the vehicle axle), and an electronic control unit (ECU) collects and processes signals of the respective sensors. When these motion sensors are utilized, a position of each of the TPMS devices may be determined.

For example, a method using the garage sensor may be as follow. The garage sensor may measure a relative displacement of a vehicle axle and a vehicle body of each of front left (FL), front right (FR), rear left (RL), and rear right (RR) of a vehicle, and an absolute displacement of the vehicle body.

While traveling, a relative displacement of the vehicle axle and the vehicle body in the direction of gravity for each position of the four wheels is changed by the irregular road surface. Signals of this displacement are collected by an ECU of an electronic control suspension device via a communication network of a vehicle.

When the relative displacement of the vehicle axle and the vehicle body is increased and reduced, acceleration in the direction of gravity of the vehicle body may be reduced and increased. When the acceleration of the vehicle body is increased and reduced, the inner pressure P of the tire may be increased and reduced. The inner pressure P changed by the acceleration of the vehicle body is collected by the ECU of the TPMS by the pressure sensor. When comparing and analyzing information about the displacement and information about the inner pressure which are collected in each ECU, the position of the TPMS device may be determined.

For example, a method of using the gyro sensor mounted in the vehicle body is as follows. The gyro sensor is mounted in the vehicle body of the vehicle, and measures each of a roll, a pitch, or a yaw in the traveling direction, or a rotational angular velocity in the combined direction.

Each of the roll, the pitch, or the yaw in the traveling direction or the rotational angular velocity in the combined direction may be changed at the time of steering or acceleration/deceleration while traveling.

Signals of the angular velocity are collected in an ECU of an electronic control travel stabilization device via the communication network of the vehicle. The change in the rotational angular velocity may cause a change in the center of gravity of the vehicle, so that acceleration in the direction of gravity for each position of the vehicle body such as four parts of FL, FR, RL, and RR of the vehicle may be changed.

When the acceleration of the vehicle body is increased and reduced, the inner pressure P of the tire may be increased and reduced. The inner pressure P changed by the acceleration of the vehicle body may be collected in the ECU of the TPMS device by the pressure sensor. When comparing and analyzing information about the angular velocity and information about the inner pressure, which are collected in each ECU, the position of the TPMS device may be determined.

For example, a method of using the traveling-direction acceleration sensor and the transverse acceleration sensor which are mounted in the vehicle body is as follows. The traveling-direction acceleration sensor and the transverse acceleration sensor are mounted in the vehicle body of the vehicle, and measure acceleration in the traveling direction or in the transverse direction of the vehicle body. At the time of steering or acceleration/deceleration while traveling, acceleration in the traveling direction or in the transverse direction of the vehicle body may be changed.

Signals of the acceleration are collected in the ECU of the electronic control travel stabilization device via the communication network of the vehicle. The change in the acceleration in the traveling direction or in the transverse direction may cause a change in the center of gravity of the vehicle, so that acceleration in the vertical direction for each position of the vehicle body such as four parts of FL, FR, RL, and RR of the vehicle may be changed.

When the acceleration in the vertical direction of the vehicle body is increased and reduced, the inner pressure P of the tire may be increased and reduced. The inner pressure P changed by the acceleration in the vertical direction of the vehicle body is collected in the ECU of the TPMS by the pressure sensor. When comparing and analyzing information about the acceleration and information about the inner pressure which are collected in each ECU, the position of the TPMS device may be determined.

In addition, based on a variety of motion sensors around the wheels (the vehicle body and the vehicle axle) and inside the vehicle and values for the motion sensors, the position of the TPMS device may be determined when comparing and analyzing with the inner pressure of the tire.

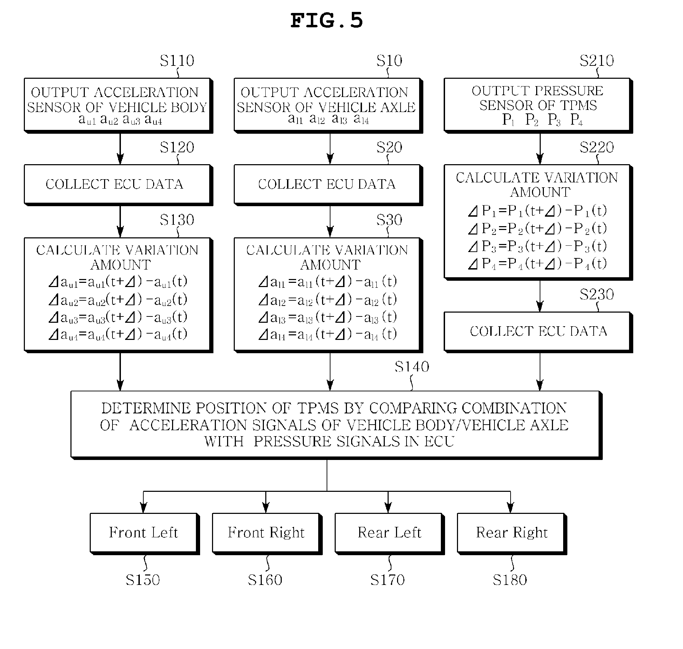

FIG. 5 is a flowchart of a position determination method of the TPMS device 100 according to a preferred embodiment of the present invention, and is one of the various flowcharts using an acceleration sensor of, for example, the vehicle body and the vehicle axle.

First, acceleration signals (au1, au2, au3, and au4) of the vehicle body are output in S110, data is collected in the ECU via a CAN communication of the vehicle in S120, and a variation amount is calculated in S130. In this instance, a variation amount of each of the acceleration signals (au1, au2, au3, and au4) of the vehicle body is calculated. Similarly, acceleration signals (all, a12, a13, and al4) of the vehicle axle are output in S010, data is collected in the ECU via the CAN communication of the vehicle in S020, and a variation amount is calculated in S030. In this instance, the variation amount of each of the acceleration signals (all, a12, a13, and al4) of the vehicle axle is calculated (see FIG. 5 of the corresponding Equation).

Meanwhile, inner pressures (PI, P2, P3, and P4) of the TPMS pressure sensor are output in S210, and a variation amount is calculated to be transmitted by radio frequency (RF) in S220. In this instance, the variation amount of each of the inner pressures (PI, P2, P3, and P4) is calculated, and ECU data is collected in S230.

Next, in S140, a combination of the acceleration signals of the vehicle body and the vehicle axle is compared with the pressure signal to be determined in the ECU. In this instance, by the variation amount in the ECU, a left front S150, a right front S160, a left rear S170, and a right rear S180 of the vehicle body are respectively distinguished.

As described above, in the TPMS device 100 according to a preferred embodiment of the present invention, a method for overcoming the problem in the auto location function in the TPMS that has been known so far is presented.

In the TPMS device according to a preferred embodiment of the present invention, the pressure sensor mounted in the TPMS sensor module and a variety of sensors mounted around the wheels (the vehicle body or the vehicle axle) of the vehicle are used to distinguish left/right/front/rear of the vehicle.

A local load of the vehicle exerted on the four wheels of the vehicle body or the vehicle axle may be changed by the irregular road surface at the time of steering or acceleration/deceleration while traveling. In this instance, the inner pressure of the tire may be changed by a difference in the force applied from the vehicle axle to the tire.

The local load of the vehicle exerted on the four wheels may be different depending on the wheels positioned in the FL, FR, RL, and RR of the vehicle and this may cause a difference in the inner pressure of the four wheels.

Consequently, when comparing and analyzing the force applied to the tire for each position of the vehicle and the inner pressure of the tire, the position of the TPMS device may be determined.

As an example, the acceleration in the direction of gravity of the four parts of the vehicle body may be respectively changed at the time of steering or acceleration/deceleration while traveling. In this instance, the force applied to the tire may be increased in a part where the acceleration value in the direction of gravity of the vehicle body is increased, and at the same time, the inner pressure of the tire may be increased accordingly. Conversely, the force applied to the tire may be reduced in a part where the acceleration value in the direction of gravity of the vehicle body is reduced, and at the same time, the inner pressure of the tire may be reduced accordingly.

As an example, when traveling on the irregular road surface, a displacement in the direction of gravity between each of the vehicle axles and the vehicle body may be changed. In this instance, the force applied to the tire may be increased in a part where a relative displacement value of the vehicle axle and the vehicle body is reduced, and at the same time, the inner pressure of the tire may be increased accordingly. Conversely, the force applied to the tire may be reduced in a part where the relative displacement value of the vehicle axle and the vehicle body is increased, and at the same time, the inner pressure of the tire may be reduced accordingly.

The signals of the acceleration sensor and the displacement sensor mounted around the wheels are collected in the ECU of the electronic control device via the communication network, and the position of the TPMS device may be determined when comparing and analyzing the collected acceleration information and the displacement information with the pressure sensor signals of the ECU within the TPMS device.

As set forth above, in the TPMS device according to the preferred embodiment of the present invention, since the position of the ECU is not limited, low costs and high reliability may be realized.

Also, since additional installation costs of the antenna wiring from the ECU to each of the wheels are not created, low costs may be realized. Also, since the rotation sensor is not used, accuracy is improved, and costs are reduced.

Also, since the pressure sensor that is mounted in the TPMS device and the motion sensor that is mounted in the vehicle in advance are used, the position of the tire in which each TPMS is mounted is determined without separate additional costs, thereby reducing costs.

Although the embodiment of the present invention has been disclosed for illustrative purposes, it will be appreciated that a TPMS device according to the invention is not limited thereto, and those skilled in the art will appreciate that various modifications, additions and substitutions are possible, without departing from the scope and spirit of the invention.

Accordingly, any and all modifications, variations or equivalent arrangements should be considered to be within the scope of the invention, and the detailed scope of the invention will be disclosed by the accompanying claims.

**Claims**

1. A tire pressure monitoring system (TPMS) device, comprising:

    a pressure sensor recognizing an inner pressure of a tire;
    a pressure signal collecting processor collecting and processing a pressure signal of the pressure sensor;
    a motion sensor mounted in a vehicle body; and
    a motion signal collecting processor collecting and processing a motion signal from the motion sensor,
    wherein a position of the tire is determined by comparing the information from the pressure sensor and the motion sensor, where the information includes a magnitude or a phase of the sensors signals, or a combination of the two.

2. The TPMS device as set forth in claim 1, wherein the motion sensor is one of an acceleration sensor, a displacement sensor, and an angular velocity sensor.

3. The TPMS device as set forth in claim 2, wherein the position of the tire is determined by comparing an increased or reduced amount of the acceleration of the vehicle body in the direction of gravity of the acceleration sensor and an increased or reduced amount of the inner pressure of the tire of the pressure sensor.

4. The TPMS device as set forth in claim 2, wherein the position of the tire is determined by comparing an increased or decreased amount of a displacement of the vehicle body in the direction of gravity of the displacement sensor and a reduction or an increase amount in the inner pressure of the tire of the pressure sensor.

5. The TPMS device as set forth in claim 2, wherein the position of the tire is determined by comparing an increased or decreased amount of an angular velocity of the vehicle body in the direction of gravity of the angular velocity sensor and an increased or decreased amount of the inner pressure of the tire of the pressure sensor.

6. A TPMS device, comprising:

    a pressure sensor recognizing an inner pressure of a tire;
    a pressure signal collecting processor collecting and processing a pressure signal of the pressure sensor;
    a motion sensor mounted on a vehicle axle; and
    a motion signal collecting processor collecting and processing a motion signal from the motion sensor,
    wherein a position of the tire is determined by comparing the information from the pressure sensor and the motion sensor, where the information includes a magnitude or a phase of the sensors signals, or a combination of the two.

7. The TPMS device as set forth in claim 6, wherein the motion sensor is one of an acceleration sensor, a displacement sensor, and an angular velocity sensor.

8. The TPMS device as set forth in claim 7, wherein the position of the tire is determined by comparing an increased or decreased amount in acceleration of a vehicle axle in the direction of gravity of the acceleration sensor and an increase or reduction amount in the inner pressure of the tire of the pressure sensor.

9. The TPMS device as set forth in claim 7, wherein the position of the tire is determined by comparing an increased or decreased amount of a displacement of a vehicle axle in the direction of gravity of the displacement sensor and a reduction or increase amount of the inner pressure of the tire of the pressure sensor.

10. The TPMS device as set forth in claim 7, wherein the position of the tire is determined by comparing an increased or decreased amount of the acceleration of a vehicle axle in the direction of gravity of the angular velocity sensor and an increase or a reduction amount of the inner pressure of the tire of the pressure sensor.

11. A TPMS device, comprising:

    a pressure sensor recognizing an inner pressure of a tire;
    a pressure signal collecting processor collecting and processing a pressure signal of the pressure sensor;
    a motion sensor mounted in a vehicle body;
    a motion sensor mounted on a vehicle axle; and

a motion signal collecting processor collecting and processing a plurality of motion signals from the motion sensors,

wherein a position of the tire is determined by comparing the information from the pressure sensor and the motion sensor, where the information includes a magnitude or a phase of the sensors signals, or a combination of the two.

12. The TPMS device as set forth in claim 11, wherein the plurality of motion sensors are one of an acceleration sensor, a displacement sensor, and an angular velocity sensor.

13. The TPMS device as set forth in claim 12, wherein the position of the tire is determined by comparing an increased or decreased amount in acceleration of a vehicle body and a vehicle axle in the direction of gravity of the acceleration sensor, and an increased or decreased amount in the inner pressure of the tire of the pressure sensor.

14. The TPMS device as set forth in claim 12, wherein the position of the tire is determined by comparing an increased or decreased amount of the displacement of a vehicle body and a vehicle axle in the direction of gravity of the displacement sensor and an increased or decreased amount of the inner pressure of the tire of the pressure sensor.

15. The TPMS device as set forth in claim 12, wherein the position of the tire is determined by comparing an increased or decreased amount of the acceleration of a vehicle body and a vehicle axle in the direction of gravity of the angular velocity sensor and an increased or decreased amount of the inner pressure of the tire of the pressure sensor.

16. A TPMS device, comprising:

a plurality of pressure sensors recognizing an inner pressure of a tire;
a pressure signal collecting processor collecting and processing a plurality of pressure signals of the pressure sensors;
a plurality of motion sensors mounted in a vehicle body; and
a motion signal collecting processor collecting and processing a plurality of motion signals of the motion sensors;
wherein a position of the tire is determined by comparing the information from the plurality of pressure sensors and the plurality of motion sensors, where the information includes a magnitude or a phase of the sensors signals, or a combination of the two.

17. The TPMS device as set forth in claim 16, wherein the motion sensor is one of an acceleration sensor, a displacement sensor, and an angular velocity sensor.

18. The TPMS device as set forth in claim 17, wherein the position of the tire is determined by comparing an increased or reduced amount of the acceleration of the vehicle body in the direction of gravity of the acceleration sensors and an increased or reduced amount of the inner pressure of the tire of the pressure sensors.

19. The TPMS device as set forth in claim 17, wherein the position of the tire is determined by comparing an increased or decreased amount of a displacement of the vehicle body in the direction of gravity of the displacement sensors and a reduction or an increase amount in the inner pressure of the tire of the pressure sensors.

20. The TPMS device as set forth in claim 17, wherein the position of the tire is determined by comparing an increased or decreased amount of an angular velocity of the vehicle body in the direction of gravity of the angular velocity sensors and an increased or decreased amount of the inner pressure of the tire of the pressure sensors.

21. A TPMS device, comprising:

a plurality of pressure sensors recognizing an inner pressure of a tire;
a pressure signal collecting processor collecting and processing a plurality of pressure signals of the pressure sensors;
a plurality of motion sensors mounted on a vehicle axle; and
a motion signal collecting processor collecting and processing a plurality of motion signals of the motion sensors;
wherein a position of the tire is determined by comparing the information from the plurality of pressure sensors and the plurality of motion sensors, where the information includes a magnitude or a phase of the sensors signals, or a combination of the two.

22. The TPMS device as set forth in claim 21, wherein the motion sensor is one of an acceleration sensor, a displacement sensor, and an angular velocity sensor.

23. The TPMS device as set forth in claim 22, wherein the position of the tire is determined by comparing an increased or reduced amount of the acceleration of the vehicle body in the direction of gravity of the acceleration sensors and an increased or reduced amount of the inner pressure of the tire of the pressure sensors.

24. The TPMS device as set forth in claim 22, wherein the position of the tire is determined by comparing an increased or decreased amount of a displacement of the vehicle body in the direction of gravity of the displacement sensors and a reduction or an increase amount in the inner pressure of the tire of the pressure sensors.

25. The TPMS device as set forth in claim 22, wherein the position of the tire is determined by comparing an increased or decreased amount of an angular velocity of the vehicle body in the direction of gravity of the angular velocity sensors and an increased or decreased amount of the inner pressure of the tire of the pressure sensors.

26. A TPMS device, comprising:

   a plurality of pressure sensors recognizing an inner pressure of a tire;
   a pressure signal collecting processor collecting and processing a plurality of pressure signals of the pressure sensors;
   a plurality of motion sensors mounted in a vehicle body;
   a plurality of motion sensors mounted on a vehicle axle; and
   a motion signal collecting processor collecting and processing a plurality of motion signals of the motion sensors;
   wherein a position of the tire is determined by comparing the information from the plurality of pressure sensors and the plurality of motion sensors, where the information includes a magnitude or a phase of the sensors signals, or a combination of the two.

27. The TPMS device as set forth in claim 26, wherein the motion sensor is one of an acceleration sensor, a displacement sensor, and an angular velocity sensor.

28. The TPMS device as set forth in claim 27, wherein the position of the tire is determined by comparing an increased or reduced amount of the acceleration of the vehicle body in the direction of gravity of the acceleration sensors and an increased or reduced amount of the inner pressure of the tire of the pressure sensors.

29. The TPMS device as set forth in claim 27, wherein the position of the tire is determined by comparing an increased or decreased amount of a displacement of the vehicle body in the direction of gravity of the displacement sensors and a reduction or an increase amount in the inner pressure of the tire of the pressure sensors.

30. The TPMS device as set forth in claim 27, wherein the position of the tire is determined by comparing an increased or decreased amount of an angular velocity of the vehicle body in the direction of gravity of the angular velocity sensors and an increased or decreased amount of the inner pressure of the tire of the pressure sensors.

# FIG.1

# FIG.2

# FIG.3

(a)

(b)

# FIG. 4

(a)

(b)

# FIG.5

S110
**OUTPUT ACCELERATION SENSOR OF VEHICLE BODY**
$a_{u1}$ $a_{u2}$ $a_{u3}$ $a_{u4}$

S10
**OUTPUT ACCELERATION SENSOR OF VEHICLE AXLE**
$a_{l1}$ $a_{l2}$ $a_{l3}$ $a_{l4}$

S210
**OUTPUT PRESSURE SENSOR OF TPMS**
$P_1$ $P_2$ $P_3$ $P_4$

S120
**COLLECT ECU DATA**

S20
**COLLECT ECU DATA**

S220
**CALCULATE VARIATION AMOUNT**
$\Delta P_1 = P_1(t+\Delta) - P_1(t)$
$\Delta P_2 = P_2(t+\Delta) - P_2(t)$
$\Delta P_3 = P_3(t+\Delta) - P_3(t)$
$\Delta P_4 = P_4(t+\Delta) - P_4(t)$

S130
**CALCULATE VARIATION AMOUNT**
$\Delta a_{u1} = a_{u1}(t+\Delta) - a_{u1}(t)$
$\Delta a_{u2} = a_{u2}(t+\Delta) - a_{u2}(t)$
$\Delta a_{u3} = a_{u3}(t+\Delta) - a_{u3}(t)$
$\Delta a_{u4} = a_{u4}(t+\Delta) - a_{u4}(t)$

S30
**CALCULATE VARIATION AMOUNT**
$\Delta a_{l1} = a_{l1}(t+\Delta) - a_{l1}(t)$
$\Delta a_{l2} = a_{l2}(t+\Delta) - a_{l2}(t)$
$\Delta a_{l3} = a_{l3}(t+\Delta) - a_{l3}(t)$
$\Delta a_{l4} = a_{l4}(t+\Delta) - a_{l4}(t)$

S230
**COLLECT ECU DATA**

S140
**DETERMINE POSITION OF TPMS BY COMPARING COMBINATION OF ACCELERATION SIGNALS OF VEHICLE BODY/VEHICLE AXLE WITH PRESSURE SIGNALS IN ECU**

Front Left
S150

Front Right
S160

Rear Left
S170

Rear Right
S180

Europäisches
Patentamt

European
Patent Office

Office européen
des brevets

**EUROPEAN SEARCH REPORT**

Application Number

EP 12 16 6318

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 904 722 A1 (SIEMENS VDO AUTOMOTIVE AG [DE]) 8 February 2008 (2008-02-08) | 1,2,6,7, 11,12, 16,17, 21,22, 26,27 | INV. B60C23/04 |
| A | * the whole document * | 3-5, 8-10, 13-15, 18-20, 23-25, 28-30 | |
| A | US 2005/248446 A1 (WATABE NOBUYA [JP] ET AL) 10 November 2005 (2005-11-10) * the whole document * | 1-30 | |
| | | | **TECHNICAL FIELDS SEARCHED (IPC)** |
| | | | B60C |

The present search report has been drawn up for all claims

| Place of search | Date of completion of the search | Examiner |
|---|---|---|
| Munich | 14 December 2012 | Gaillard, Alain |

EPO FORM 1503 03.82 (P04C01)

**ANNEX TO THE EUROPEAN SEARCH REPORT**
**ON EUROPEAN PATENT APPLICATION NO.**                    EP 12 16 6318

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2012

| Patent document cited in search report | | Publication date | Patent family member(s) | Publication date |
|---|---|---|---|---|
| FR 2904722 | A1 | 08-02-2008 | DE 102006036819 A1<br>FR 2904722 A1<br>US 2008033608 A1 | 14-02-2008<br>08-02-2008<br>07-02-2008 |
| US 2005248446 | A1 | 10-11-2005 | JP 2005321958 A<br>US 2005248446 A1 | 17-11-2005<br>10-11-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110096368